# EUROPÄISCHE PATENTSCHRIFT

(11) **EP 2 756 734 B1**
(45) Veröffentlichungstag und Bekanntmachung des Hinweises auf die Patenterteilung: **31.08.2016**
(21) Anmeldenummer: 12766930.7
(22) Anmeldetag: 11.09.2012
(51) Int. Cl.: H05B 6/14, H05B 6/36, H05B 6/10, B23P 11/02

(54) **INDUKTIONSSPULENEINHEIT**
INDUCTION COIL UNIT
ENSEMBLE BOBINE D'INDUCTION

(30) Priorität: 13.09.2011 DE 102011082613
(43) Veröffentlichungstag der Anmeldung: 23.07.2014
(73) Patentinhaber: Haimer GmbH, 86568 Hollenbach-Igenhausen (DE)
(72) Erfinder: HAIMER, Franz, 86568 Hollenbach-Igenhausen (DE); KÜGLE, Wolfgang, 86551 Aichach-Griesbeckerzell (DE)
(74) Vertreter: Weickmann & Weickmann PartmbB
(86) Internationale Anmeldenummer: PCT/EP2012/067720
(87) Internationale Veröffentlichungsnummer: WO 2013/037763

(56) Entgegenhaltungen:
- WO-A2-2008/098752
- DE-A1- 19 915 412
- DE-A1-102005 005 892
- DE-C- 922 700

## Beschreibung

Die Erfindung betrifft eine Induktionsspuleneinheit zum Erwärmen eines relativ zu einer Achse rotationssymmetrischen Bauteils aus elektrisch leitendem Material und insbesondere zum Erwärmen eines Hülsenteils, welches in einer zu der Achse zentrischen Aufnahmeöffnung einen langgestreckten Gegenstand im Presssitz hält, vorzugsweise zum Erwärmen des Hülsenteils eines Werkzeughalters, der in seiner zur Drehachse zentrischen Aufnahmeöffnung einen Schaft eines Rotationswerkzeugs, insbesondere eines Bohr- oder Fräswerkzeugs, im Presssitz hält.

Es ist bekannt, den zylindrischen Schaft eines rotierend anzutreibenden Werkzeugs, beispielsweise eines Bohrers oder Fräsers, in eine im Wesentlichen zylindrische Aufnahmeöffnung eines Werkzeughalters einzuschrumpfen. Der Werkzeugschaft hat bezogen auf den Innendurchmesser der Aufnahmeöffnung Übermaß. Zum Einsetzen oder Entnehmen des Werkzeugschafts wird der die Aufnahmeöffnung enthaltende Hülsenteil des Werkzeughalters erwärmt, bis der Innendurchmesser der Aufnahmeöffnung so weit gedehnt ist, dass der Werkzeugschaft eingesetzt oder entnommen werden kann. Nach dem Erkalten hält der Hülsenteil den Werkzeugschaft im Presssitz.

Während das Einsetzen des Werkzeugschafts in den wärmegedehnten Werkzeughalter in aller Regel problemlos vonstattengeht, muss für das Entnehmen des Werkzeugschafts aus dem Werkzeughalter der Werkzeughalter so rasch erwärmt werden, dass der Werkzeughalter sich dehnt, bevor durch Wärmeleitung auch der Werkzeugschaft mit erwärmt wird, was zum Verklemmen des Werkzeugschafts im Werkzeughalter führt und das Ausspannen des Werkzeugs erschwert, wenn nicht gar unmöglich macht.

Es ist bekannt, den üblicherweise aus Stahl, d. h. einem elektrisch leitenden Material bestehenden Werkzeughalter induktiv mittels einer Induktionsspuleneinheit erzeugte Wirbelströme zu erwärmen. Die Induktionsspule herkömmlicher Geräte umschließt hierbei gleichachsig den Werkzeughalter. Eine solche Induktionsspule erzeugt in dem von ihr umschlossenen Werkzeughalter einen axial verlaufenden Magnetfluss, der den Werkzeughalter erwärmt.

Es hat sich jedoch gezeigt, dass eine solche Induktionsspule magnetische Streufelder erzeugt, die nicht nur dem Werkzeughalter, sondern auch in einem gewissen Umfang das darin im Presssitz gehaltene Werkzeug mit erwärmen. Um dies zu vermeiden, ist es aus DE 199 15 412 A1 bekannt, die dem Werkzeug benachbarte Stirnseite der Induktionsspule mit einer Polscheibe aus weichmagnetischem Material, beispielsweise Ferrit, abzudecken. Die auf der werkzeugseitigen Stirn des Werkzeughalters aufliegende Polscheibe konzentriert den Magnetfluss in dem Werkzeughalter und schirmt in gewissem Umfang den Werkzeugschaft gegen Streufelder ab. Die aus DE 199 15 412 A1 bekannte Induktionsspule vermag jedoch den Werkzeughalter nicht gleichförmig zu erwärmen, so dass es lokal zu Überhitzungsschäden an dem Werkzeughalter kommen kann. Darüber hinaus verhindert die auf der Stirn des Werkzeughalters aufliegende Polscheibe, dass radial auskragende Werkzeuge bis unmittelbar an die Stirn des Werkzeughalters herangeführt eingeschrumpft werden können.

Aus DE 10 2005 005 892 A1 ist eine weitere Induktionsspuleneinheit bekannt, bei welcher mehrere in Umfangsrichtung verteilt angeordnete Polelemente aus weichmagnetischem Material radial verstellbar in einem Jochring aus weichmagnetischem Material angeordnet sind. Die Polelemente haben dem Werkzeughalter radial zugewandte Endflächen, die in einen linienförmigen Anlagekontakt zur Umfangsfläche des Werkzeughalters bringbar sind. Die Polelemente sind von gesondert zugeordneten Spulen umschlossen und induzieren, wenn sie in an sich bekannter Weise mit Wechselstrom gespeist werden, in dem Werkzeughalter Magnetflüsse, die den Werkzeughalter in Umfangsrichtung durchfluten und den Werkzeughalter erwärmende Wirbelströme erzeugen. Da die Polelemente auf der Umfangsfläche des Werkzeughalters anliegen, erübrigt sich eine auf der Stirnfläche des Werkzeughalters anliegende Polscheibe, wie sie bei DE 199 15 412 A1 vorgesehen ist, und dementsprechend können radial auskragende Werkzeuge bis an die Stirn des Werkzeughalters heran eingeschrumpft werden.

Bei der aus DE 10 2005 005 892 A1 bekannten Induktionsspuleneinheit verlaufen die axialen Enden der an der Außenfläche des Werkzeughalters anliegenden Endflächen der Polelemente im Abstand von dem Werkzeughalter, was den magnetischen Widerstand des Magnetflusskreises im Bereich der Enden erhöht, wodurch eine lokale Überhitzung des Werkzeughalters in diesen Bereichen für manche Anwendungsfälle hinreichend vermieden wird. Es hat sich jedoch gezeigt, dass die Adaptierung der Endflächen der Polelemente aufwendig ist und für manche Anwendungsfälle zur Vermeidung lokaler Überhitzungen des Werkzeughalters nicht ausreicht.

Unter einem ersten Aspekt ist es Aufgabe der Erfindung, eine Induktionsspuleneinheit zum Erwärmen eines rotationssymmetrischen Bauteils, insbesondere eines Hülsenteils, beispielsweise eines Werkzeughalters, zu schaffen, die sich einfacher als bisher an unterschiedliche Bauteile anpassen lässt, um das Bauteil gleichmäßiger als bisher zu erwärmen.

Die Erfindung geht von einer Induktionsspuleneinheit zum Erwärmen eines relativ zu einer Achse rotationssymmetrischen Bauteils aus elektrisch leitendem Material, insbesondere eines Hülsenteils, welches in einer zu der Achse zentrischen Aufnahmeöffnung einen langgestreckten Gegenstand im Pressitz hält, vorzugsweise zum Erwärmen des Hülsenteils eines Werkzeughalters, der in seiner zur Drehachse zentrischen Aufnahmeöffnung einen Schaft eines Rotationswerkzeugs, insbesondere eines Bohr- oder Fräswerkzeugs, im Presssitz hält, aus, wobei diese Induktionsspuleneinheit umfasst:
- einen zur Achse zentrischen Aufnahmeraum für das Bauteil,
- eine insbesondere geradzahlige Anzahl um die Achse herum verteilte, insbesondere in gleichen Winkelabständen verteilte Polelemente aus einem Material mit weichmagnetischen, magnetflussleitenden Eigenschaften,
- wenigstens eine mit Wechselstrom speisbare Spule zur Erzeugung magnetischer Flüsse in den Polelementen, insbesondere mehrere dieser Spulen,
- wobei die Polelemente radial zur Achse beweglich an der Einheit geführt sind und zwischen einer der Achse nahen ersten Stellung und einer der Achse fernen zweiten Stellung bewegbar sind und
- wobei die Polelemente der Achse im Wesentlichen radial zugewandte Endflächen haben, die in der ersten Stellung zumindest in einem Teilbereich ihrer axialen Höhe längs einer Erzeugenden einer äußeren Umfangsfläche des Bauteils in Anlagekontakt oder nahezu in Anlagekontakt mit der äußeren Umfangsfläche des Bauteils stehen.

Die vorstehend erwähnte Aufgabe wird unter dem ersten Aspekt erfindungsgemäß dadurch gelöst, dass zumindest der für die Anlage oder Nahezu-Anlage bestimmte Teilbereich der Endfläche jedes Polelements als längs der Achse langgestreckter Scheitelbereich von zur Achse hin aufeinander zu verlaufenden Teilflächen gebildet ist, wobei die radiale Höhe der von den Teilflächen begrenzten achsnormalen Querschnittsfläche des Polelements radial zur Achse variiert ist und/oder der Krümmungsradius des Scheitelbereichs in der achsnormalen Querschnittsfläche variiert ist und/oder die Breite des Scheitelbereichs in Umfangsrichtung des Bauteils gesehen in der achsnormalen Querschnittsfläche längs der Achse variiert ist.

Durch die Variation der radialen Höhe und/oder des Krümmungsradius und/oder der Scheitelbereichsbreite durch die Gestaltung der aufeinander zu verlaufenden Teilflächen kann bei einer den Magnetfluss in Umfangsrichtung des Bauteils lenkenden "Querteldspule" auf einfache Weise der lokale magnetische Widerstand der Endflächen variiert und damit der magnetische Fluss in dem Bauteil lokal in einem Nebenschluss zu den am Bauteil anliegenden Bereichen der Endfläche variiert und angepasst werden.

Bei der Erzeugenden der äußeren Umfangsfläche handelt es sich um die Konturbegrenzungslinie im mathematischen Sinn. Wenn hier und im Folgenden von radialer Richtung, axialer Richtung oder Umfangsrichtung die Rede ist, so beziehen sich die Richtungsangaben stets auf die genannte Achse. Polelemente sowie auch sonst hier und im Folgenden erwähnte Materialien mit weichmagnetischen, magnetflussleitenden Eigenschaften, wie zum Beispiel Polstäbe oder Joche oder dgl., bestehen aus elektrisch nicht leitendem Material, um in diesen Elementen keine Wirbelstromverluste zu erzeugen. Die Anzahl der Polelemente und/oder Spulen ist bevorzugt geradzahlig. Es versteht sich, dass auch eine ungeradzahlige Anzahl Polelemente und/oder Spulen eingesetzt werden können.

Bei den Polelementen kann es sich um einstückige Platten oder Stäbe mit rechteckigem, quadratischem oder rundem Querschnitt handeln und dementsprechend variiert die Form der Endfläche entlang des einstückigen Elements. Es versteht sich, dass es sich bei dem Bereich der Endfläche auch um ein betriebsmäßig abnehmbares Teil des ansonsten einstückigen Polelements handeln kann, wie dies in DE 10 2005 005 892 A1 erläutert ist.

In einer bevorzugten Ausgestaltung, die es dem Polelement erlaubt, sich auch einer in Richtung der Achse verändernden Kontur des Bauteils anzupassen, ist zumindest eines oder bevorzugt sämtliche der Polelemente als Stapel aus mehreren zueinander parallel radial zur Achse relativ zueinander beweglich geführten Polstäben ausgebildet. Die der Achse zugewandten Enden dieser Polstäbe bilden gesonderte Scheitelbereiche, wobei die radiale Höhe der von den Teilflächen begrenzten, achsnormalen Querschnittsflächen radial zur Achse variiert ist und/oder der Krümmungsradius des Scheitelbereichs in den achsnormalen Querschnittsflächen variiert ist und/oder die Breite des Scheitelbereichs, in Umfangsrichtung des Bauteils gesehen, in der achsnormalen Querschnittsfläche längs der Stapelrichtung zumindest zwischen zwei im Stapel benachbarten Polstäben variiert. In dieser Ausgestaltung kann nicht nur der magnetische Fluss beeinflusst werden, sondern auch sichergestellt werden, dass sich das als Stapel von Polstäben ausgebildete Polelement selbsttätig der Außenkontur des Bauteils anpassen kann. Ein solches Polelement kann zum Beispiel an einem konischen Außenmantel anliegen, selbst wenn der Konuswinkel des Bauteils von Bauteil zu Bauteil oder auch innerhalb des Bauteils variiert. Der Stapel von Polstäben approximiert die Umfangskontur des Bauteils in der Praxis hinreichend, selbst wenn die Erzeugenden der Endflächen der einzelnen Polstäbe achsparallel zur Achse verlaufen.

Die Variation der Endflächen der Polelemente bzw. Polstäbe, jeweils gesehen in zur Achse normalen Schnittebenen, erlaubt es, den Magnetfluss örtlich einem variierenden Materialquerschnitt des zu erwärmenden Bauteils anzupassen. Speziell bei Werkzeughaltern nimmt der Materialquerschnitt des den Werkzeugschaft aufnehmenden Hülsenabschnitts von der Werkzeugeinsteckseite her zu, d. h. der Werkzeughalter hat in diesem Bereich einen konischen Außenmantel, und dementsprechend ändert sich auch die Umfangslänge, innerhalb der der Magnetfluss den Konus umschließt. Um für eine gleichmäßige Erwärmung eines Bauteils mit in Richtung der Achse zunehmendem Materialquerschnitt, insbesondere eines Hülsenteils mit konusförmigem Außenmantel, zu sorgen, ist zweckmäßigerweise vorgesehen, dass mit längs der Achse wachsendem Materialquerschnitt des Bauteils die radiale Höhe der von den Teilflächen begrenzten, achsnormalen Querschnittsfläche radial zur Achse abnimmt und/oder der Krümmungsradius des Scheitelbereichs in der achsnormalen Querschnittsfläche zunimmt und/oder die Breite des Scheitelbereichs, in Umfangsrichtung des Bauteils gesehen, in der achsnormalen Querschnittsfläche zunimmt.

In einer besonders einfachen Ausgestaltung sind die aufeinander zu geneigten Teilflächen sowie die Scheitelfläche im Wesentlichen ebene Flächen, die eine trapezförmige, achsnormale Querschnittsfläche begrenzen. Alternativ können die aufeinander zu geneigten Teilflächen und/oder die Scheitelfläche konvex gekrümmte Flächen sein, die eine bogenförmige, begrenzte achsnormale Querschnittsfläche begrenzen.

Es versteht sich, dass die Endfläche der Polelemente entsprechend den vorangegangen erläuterten Grundsätzen in Richtung der Achse gleichförmig sich ändernd variiert sein kann, und zwar unabhängig davon, ob die Polelemente einstückig ausgebildet sind oder als Stapel von Polstäben ausgebildet sind. Die Variation kann aber bei aus Polstäben aufgebauten Polelementen gestuft erfolgen.

Die Polstäbe sind innerhalb des Stapels jedes Polelements gegeneinander verschiebbar und können unmittelbar aneinander oder aber an Führungsflächen eines vorbestimmten Polstabs des Stapels quer zur Verschieberichtung geführt sein, wie dies zum Beispiel in DE 10 2005 005 892 A1 beschrieben ist. Alternativ können die Polstäbe aber auch an gehäusefesten Flächen der Induktionsspuleneinheit geführt sein.

Im Betrieb sollen die Polstäbe in Anlagekontakt zum Außenmantel des Bauteils treten. Hierfür geeignete Anpresskräfte erzeugt bereits das Magnetfeld bei der Wechselstromerregung der Spulen. Es hat sich jedoch herausgestellt, dass die Magnetfeldkräfte manchmal nicht ausreichen, um sämtliche Polstäbe in sicheren Anlagekontakt zum Bauteil zu bringen, insbesondere, wenn ein Teil der Polstäbe den Magnetflusskreis bereits schließt, während andere Polstäbe sich noch im Abstand zum Bauteil befinden. Wie in DE 10 2005 005 892 A1 beschrieben, können den einzelnen Polstäben Vorschubfedern zugeordnet werden, die für hinreichende, gleichmäßige Andruckkräfte sorgen können. Allerdings muss bei dieser Ausgestaltung dann dafür Sorge getragen werden, dass die Polstäbe für das Entnehmen des Bauteils aus der Induktionsspuleneinheit durch geeignete Mechanismen wieder in die zweite Stellung zurückgeschoben werden können, was zu einem vergleichsweise großen Bauaufwand führt, insbesondere wenn die Polstäbe jedes Stapels einer sich verändernden Kontur des Bauteils folgen sollen.

Unter einem zweiten Aspekt der Erfindung, der eine bevorzugte Weiterbildung des ersten Aspekts beinhaltet, jedoch auch selbstständige patentfähige Bedeutung hat, ist vorgesehen, dass wiederum zumindest eines oder sämtliche der Polelemente als Stapel aus mehreren zueinander parallel, radial zur Achse relativ zueinander beweglich geführten Polstäben ausgebildet sind, deren der Achse zugewandte Enden die Endfläche des Polelements bilden, und dass den als Stapel von Polstäben ausgebildeten Polelementen eine Antriebseinrichtung zugeordnet ist, die die Poistäbe gemeinsam für die Bewegung zwischen der ersten und der zweiten Stellung, insbesondere formschlüssig, antreibt, wobei im Antriebskraftübertragungsweg zwischen einem Antriebsorgan und zumindest einer Teilanzahl an Polstäben eine die zu übertragende Antriebskraft begrenzende Vorrichtung, insbesondere eine Rutschkupplung, angeordnet ist.

In einer solchen Ausgestaltung können die Polstäbe jedes Stapels gemeinsam von einem manuellen oder auch motorischen Antriebsorgan aus gegen die Außenfläche des Bauteils in Anlagekontakt geschoben werden. Die antriebskraftbegrenzenden Vorrichtungen sorgen hierbei dafür, dass der Anlagekontakt der einzelnen Polstäbe zum Bauteil auch dann zustande kommt, wenn der von den einzelnen Polstäben zurückzulegende Weg aufgrund der Außenkontur des Bauteils ungleich ist. Die Antriebseinrichtung kann sowohl für die Zustellbewegung als auch für die Rückholbewegung der Polstäbe genutzt werden.

Das Antriebsorgan treibt die Polstäbe über Antriebskraftübertragungswege an, die voneinander gesonderte, die Antriebskraft begrenzende Vorrichtungen enthalten. Die Antriebskraftübertragungswege können hierbei in Serie geschaltet sein, soweit die Rutschkupplungen für die dann gestaffelten zu übertragenden Kräfte ausgelegt sind. Geeignet sind auch parallele Übertragungswege vom Antriebsorgan zu den einzelnen Polstäben, da hier gleich bemessene Antriebskraftbegrenzungsvorrichtungen, wie z. B. Rutschkupplungen, eingesetzt werden können. In einer besonders einfachen Ausgestaltung ist vorgesehen, dass zumindest eine Teilanzahl der Polstäbe jedes Polelements je eine Linearverzahnung aufweist, die mit je einem Ritzel kämmt, welches über je eine Rutschkupplung mit dem Antriebsorgan oder einem anderen der Ritzel in Antriebsverbindung steht. Zweckmäßigerweise umfasst jeder anzutreibende Polstab eine solche Linearverzahnung, während Rutschkupplungen nur zwischen solchen Ritzeln vorgesehen sind, die entsprechend der Außenkontur des Bauteils Zusatzwege zu absolvieren oder zu vermeiden haben. Eine einfache und betriebssichere Ausgestaltung sieht hierbei vor, dass die Ritzel und die Rutschkupplungen auf einer gemeinsamen, zur Achse parallelen Welle angeordnet sind. Zweckmäßigerweise ist für jedes als Stapel von Polstäben ausgebildetes. Polelement eine solche Welle vorgesehen. Insbesondere wird diese Welle auch zur Führung der Polstäbe mit ausgenutzt. Um die einzelnen Wellen von einem gemeinsamen Antriebsorgan aus antreiben zu können, trägt die Welle ein Zahnrad, das mit einem zur Achse konzentrischen, mit dem Antriebsorgan in einer Drehantriebsverbindung stehenden Ringzahnräd kämmt.

Allgemeines Ziel der vorliegenden Erfindung ist, die Induktionsspuleneinheit so zu gestalten, dass sie möglichst vielseitig und damit für die Erwärmung von Bauteilen mit unterschiedlichen Außenkonturen in dem zu erwärmenden Bereich eingesetzt werden kann. Einer der Parameter, in denen sich die Bauteile, also beispielsweise die Werkzeughalter, unterscheiden können, ist die Länge des axialen zu erwärmenden Bereichs. Die Aufnahmehülse des Werkzeughalters sollte nur über die Länge desjenigen Bereichs erwärmt werden, in welchem der Werkzeugschaft im Presssitz gehalten ist. Nicht am Presssitz beteiligte Bereiche der Aufnahmehülse sollen nicht durch Erwärmung belastet werden, um Langzeitschäden an dem Werkzeughalter zu verhindern. Die Erwärmung unnötig großer Bereiche des Werkzeughalters erhöht nicht nur den Energiebedarf bei der Erwärmung, sondern auch den Energiebedarf bei der nachfolgenden Kühlung und bewirkt eine Verlängerung der Zykluszeit beim Ein- und Ausspannen des Werkzeugs.

Unter einem dritten Aspekt ist es Aufgabe der Erfindung, einen Weg zu zeigen, wie der zu erwärmende Bereich des Bauteils in Richtung der Achse auf ein gewünschtes Maß begrenzt werden kann. Dieser Aspekt bildet eine bevorzugte Weitergestaltung der Erfindung unter den vorgenannten ersten und zweiten Aspekten, hat aber auch selbstständige erfinderische Bedeutung bei Induktionsspuleneinheiten mit anderer Endflächenkonfiguration der Polelemente oder anderem Antrieb von aus Polstäben bestehenden Polelementen.

Gemäß dem dritten Aspekt der Erfindung ist vorgesehen, dass zumindest eines oder sämtliche der Polelemente als Stapel aus mehreren zueinander parallel radial zur Achse relativ zueinander beweglich geführten Polstäben ausgebildet sind, deren der Achse zugewandte Enden die Endfläche des Polelements bilden, wobei dem Polelement eine Blockiereinrichtung zugeordnet ist, mittels der die Bewegung wenigstens eines seiner Polstäbe mit radialem Abstand von der ersten Stellung in der zweiten Stellung oder einer dritten Stellung blockierbar ist.

Die Blockiereinrichtung hält den blockierten Polstab im Abstand von dem Bauteil fest, während die nicht blockierten Polstäbe entweder gemeinsam zwangsweise angetrieben oder durch Federkraft oder Magnetkraft gegen das Bauteil gestellt werden, wie dies vorangegangen beschrieben ist. Soweit die Polstäbe gemäß dem zweiten Aspekt der Erfindung gemeinsam angetrieben werden, sorgt die antriebskraftbegrenzende Vorrichtung, also beispielsweise die Rutschkupplung des blockierten Polstabs, dafür, dass die nicht blockierten Polstäbe gegen das Bauteil gestellt werden können.

Mittels der Blockiervorrichtung können innerhalb des Stapels von Polstäben einzelne Polstäbe in der zurückgezogenen und damit inaktiven Stellung blockiert werden. Dies erlaubt wahlweises Einstellen eines Erwärmungsprofils auch bei gleichbleibender axialer Länge des an dem Bauteil zu erwärmenden Bereichs. In einer bevorzugten Ausgestaltung ist vorgesehen, dass wenigstens der in dem Stapel axial am weitesten außen gelegene Polstab oder eine in dem Stapel axial am weitesten außen gelegene Gruppe aus mehreren benachbarten Polstäben blockierbar ist. Auf diese Weise lässt sich der axiale thermische Wirkungsbereich der Induktionsspuleneinheit auf einfache Weise steuern.

In einer einfachen Ausgestaltung weist die Blockiereinrichtung, dem Stapel von Polstäben benachbart, ein mit Anschlagflächen an den zu blockierenden Polstäben zusammenwirkendes, bewegbares Blockierelement mit Gegenanschlagflächen für die Anschlagflächen der zu blockierenden Polstäbe auf. Das Blockierelement kann als achsparallel zur Achse drehbar antreibbare Nockenwalze ausgebildet sein, deren Nocken mit den Anschlagflächen der Polstäbe zusammenwirkende Gegenanschlagflächen bilden. Um auf einfache Weise die Zahl der zu blockierenden Polstäbe variieren und einstellen zu können, können die Anschlagflächen und/oder Gegenanschlagflächen, bezogen auf die Bewegungsrichtung der Polstäbe und/oder des Blockierelements, gestaffelt angeordnet sein, so dass sie mit unterschiedlichem Stellhub zum Einsatz kommen.

Bevorzugt stehen sämtliche Blockierelemente in einer Zwangsantriebsverbindung mit einem gemeinsamen Antriebsorgan, beispielsweise in der Form, dass die Blockierelemente als achsparallel zur Achse drehbare Nockenwalzen ausgebildet sind und Ritzel aufweisen, die mit einem von dem Antriebsorgan antreibbaren, zur Achse konzentrischen Ringzahnrad gekuppelt sind. Bei dem Antriebsorgan kann es sich wiederum um ein manuelles Antriebsorgan, aber auch um einen motorischen Antrieb handeln.

Anders als bei Induktionsspuleneinheiten der aus DE 199 15 412 A1 bekannten Art ist der für die Aufnahme des zu erwärmenden Bauteils bestimmte Raum und damit auch das darin erwärmte Bauteil bei erfindungsgemäßen Induktionsspuleneinheiten gut zugänglich, was die Handhabung erleichtert. Ferner ist die axiale Bauhöhe verringert, was die Einsatzmöglichkeiten verbessert.

Im Folgenden wird die Erfindung anhand einer Zeichnung näher erläutert. Hierbei zeigt:
- Figur 1: eine perspektivische Ansicht einer Induktionsspuleneinheit zum induktiven Erwärmen eines Werkzeughalters zum Ein- und Ausspannen eines rotierenden Werkzeugs;
- Figur 2: einen Teil einer Schnittansicht durch die Induktionsspuleneinheit, gesehen entlang einer Linie II-II aus Figur 1;
- Figur 3: eine perspektivische, teilweise aufgebrochene Darstellung der Induktionsspuleneinheit, bei der zur deutlicheren Darstellung deren Gehäuse sowie eine ihrer Spulen nicht dargestellt ist, und
- Figur 4: eine schematische Darstellung mehrerer Polstäbe eines Stapels von Polstäben der Induktionsspuleneinheit der Figur 1.

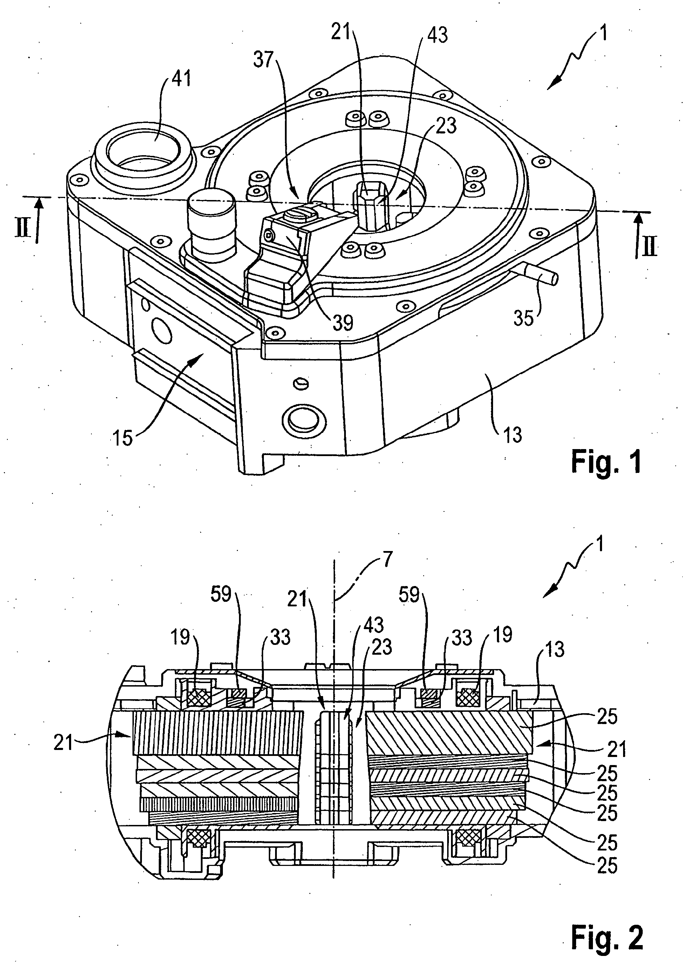

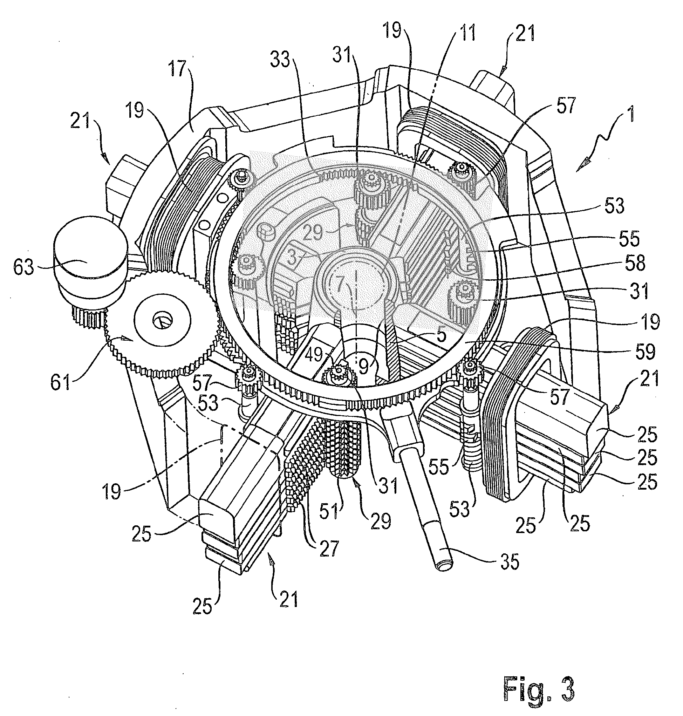

Die Figuren 1 bis 3 zeigen eine Induktionsspuleneinheit 1, mit deren Hilfe ein in Figur 3 aufgebrochen dargestelltes Hülsenteil aus elektrisch leitendem Material, hier Stahl, eines Werkzeughalters 5 auf induktivem Weg erwärmt werden kann. Der zu seiner Betriebsdrehachse 7, im Folgenden "Achse" genannt, im Wesentlichen rotationssymmetrische Werkzeughalter 5 hat eine zu der Achse 7 zentrische Aufnahmeöffnung 9 für die Presssitzaufnahme eines durch eine strichpunktierte Durchmesserlinie angedeuteten Schafts 11 eines im Übrigen nicht dargestellten, im Arbeitsbetrieb um die Drehachse 7 rotierenden Rotationswerkzeugs, beispielsweise eines Bohrers oder Fräsers. Der Werkzeugschaft hat, bezogen auf den Innendurchmesser der zylindrischen Aufnahmeöffnung 9, Übermaß und ist in den Hülsenteil 3 eingeschrumpft. Bei Erwärmen weitet sich der Hülsenteil 3 auf, so dass der Werkzeugschaft 11 in die Aufnahmeöffnung 9 eingesteckt oder aus ihr entnommen werden kann. Nach dem Abkühlen wird der in der Aufnahmeöffnung 9 eingesetzte Werkzeugschaft 11 im Presssitz in dem Hülsenteil 3 gehalten. Der Werkzeughalter 5 kann Bestandteil einer Arbeitsspindel einer Werkzeugmaschine sein oder auf der dem Hülsenteil 3 axial abgewandten Seite mit einer herkömmlichen Spindelkupplung, wie z. B. einer Steilkegelkupplung oder einer Hohlschaftkupplung (HSK-Kupplung), versehen sein.

Die Induktionsspuleneinheit 1 hat ein aus elektrischem Isoliermaterial gefertigtes, im Wesentlichen ringförmiges Gehäuse 13, hier mit Rechteckaußenkontur, das in nicht näher dargestellter Weise bei 15 an einer insbesondere vertikalen Führung eines Schrumpfgeräts betriebsmäßig axial verschiebbar gehalten ist.

Das Gehäuse 13 umschließt einen ggf. aus Segmenten zusammengesetzten Jochring 17 aus einem weichmagnetischen, Magnetfluss leitenden, jedoch elektrisch nicht leitenden Material, beispielsweise Ferrit, und trägt an seiner Ringinnenseite mehrere in gleichen Winkelabständen um die Achse 7 herum angeordnete, vorzugsweise aus Hochfrequenzlitze gewickelte Spulen 19, wie dies am besten aus Figur 3 ersichtlich ist. Die Spulen 19 sind in geradzahliger Anzahl mit gleichen Winkelabständen und mit in einer gemeinsamen achsnormalen Ebene liegenden Spulenachsen um die Achse 7 herum angeordnet, wobei eine der Spulen der Deutlichkeit wegen lediglich durch eine strichpunktierte Linie angedeutet ist. Die Spulen 19 sind, bezogen auf ihren Durchmesser, flach und mit zur Achse 7 radialer Spulenachse angeordnet. Es versteht sich, dass das vorstehend erläuterte "Querfeld" auch mit weniger Spulen, aber auch mehr Spulen, als dies der Anzahl Polelemente entsprechen würde, erzeugt werden kann. Im Einzelfall genügt eine einzige Spule.

Jede der Spulen 19 umschließt ein Polelement 21 aus entsprechend dem Jochring 17 weichmagnetischem, Magnetfluss leitendem, jedoch elektrisch nicht leitendem Material, beispielsweise Ferrit, welches an dem Gehäuse 13 und/oder dem Jochring 17 und/oder den Spulen 19 sowie in nachfolgend noch näher erläuterter Weise verschiebbar geführt ist. Jedes Polelement 21 durchdringt hierbei die Spule 19 und ragt in einen durch die Spulen 19 begrenzten Aufnahmeraum 23 (Figuren 1 und 2) für die Aufnahme des Hülsenteils 3 des Werkzeughalters 5. Die Polelemente 21 sind in nachfolgend noch näher erläuterter Weise radial bis nahe an die Achse 7 heranschiebbar, so dass sie in einer ersten Stellung auch an Hülsenteilen 3 mit stark unterschiedlichem Durchmesser anliegen können. Die Polelemente 21 sind durch einen nachfolgend noch näher erläuterten Antrieb von der Achse 7 weg in eine zweite radial äußere Stellung bewegbar, in der der Hülsenteil 3 in den Aufnahmeraum 23 eingeführt oder aus dem Aufnahmeraum 23 entnommen werden kann.

Die Polelemente 21 sind als Stapel in Richtung der Achse 7 übereinander angeordneter Polstäbe 25, hier jeweils sechs Polstäben 25, ausgebildet, die gemeinsam radial bewegt werden können, jedoch relativ zueinander radial zur Achse 7 verschiebbar sind. Jeder der Polstäbe 25 umfasst eine zahnstangenartige Linearverzahnung 27, die mit einer den Polstäben 25 jedes Stabes gemeinsam zugeordneten Ritzelwelle 29 kämmen. Die Ritzelwellen 29 sind achsparallel zur Achse 7 angeordnet und tragen je ein Antriebszahnrad 31, das seinerseits mit einem in dem Gehäuse 13 zur Achse 7 gleichachsig drehbaren, gemeinsamen ersten Ringzahnrad 33 kämmt. Das Ringzahnrad 33 trägt einen außerhalb des Gehäuses 13 zugänglichen Handhebel 35, mittels dem das Ringzahnrad 33 gedreht werden kann und damit die Polelemente 21 über die Ritzelwalzen 29 gemeinsam radial zur Achse 7 bewegt werden kann.

Im Betrieb ist der Werkzeughalter 5 stationär an einer nicht näher dargestellten Aufnahme bzw. einem Halter fixiert, während die Induktionsspuleneinheit 1 längs einer gleichfalls nicht dargestellten, zumeist vertikalen Führungsschiene gleichachsig zur Achse 7 des Werkzeughalters verschiebbar geführt ist, um den Werkzeughalter 5 in den Aufnahmeraum 23 der Induktionsspuleneinheit 1 einführen zu können. Auf der Werkzeugeinsteckseite des Werkzeughalters 5 trägt die Induktionsspuleneinheit 1 einen Anschlag 37 (Figur 1), der in der Betriebsstellung an einer axialen Stirnfläche des Werkzeughalters 5 anliegt und für eine reproduzierbare Position der Induktionsspuleneinheit 1 relativ zum Werkzeughalter 5 sorgt. Der Anschlag 37 hat einen schräg zur Achse 7 verstellbar, jedoch arretierbar geführten Anschlagfinger 39, wie dies bereits in DE 10 2005 005 892 A1 erläutert ist. Nachdem die Induktionsspuleneinheit 1 bis zum Anliegen des Anschlags 37 an den Werkzeughalter 5 herangeführt wurde, werden die Polelemente 21 mittels des Handhebels 35 in Anlagekontakt an den Außenmantel des Hülsenabschnitts 3 herangefahren. Die nachfolgende Erregung der Spulen 19 mit Wechselstrom induziert in dem Hülsenabschnitt 3 einen in Umfangsrichtung verlaufenden Magnetfluss, der den Hülsenabschnitt 3 zum Ein- oder Ausspannen des Werkzeugschafts erwärmt. Über einen in Figur 1 bei 41 erkennbaren Kühlmittelanschluss wird Kühlluft oder Kühlflüssigkeit über eine oder mehrere Düsen gegen den erwärmten Werkzeughalter 5 geleitet, der hierdurch auf eine gegen Berühren ungefährliche Temperatur abgekühlt wird.

Der Werkzeughalter 5 hat, wie Figur 3 zeigt, einen konischen Außenmantel, während der die Aufnahmeöffnung. 9 bildende Innenmantel zylindrisch ist. Von der in Figur 3 oben gelegenen Werkzeugeinsteckseite nimmt deshalb sowohl die Dicke des Materialquerschnitts als auch die äußere Umfangslänge der Aufnahmehülse 3 in Richtung der Achse 7 zu. Die sich ändernden Abmessungen beeinflussen die Wirbelstromanregung in der Aufnahmehülse 3 und damit die lokale Erwärmung, die sich ohne Gegenmaßnahmen in Achsrichtung verändern würde.

Um für eine in Richtung der Achse 7 gleichmäßige Erwärmung der Aufnahmehülse 3 zu sorgen, haben die Polelemente 21 Endflächenbereiche 43, deren Querschnittskontur sich, bezogen auf zur Achse 7 normale Ebenen, in Richtung der Achse 7 zumindest zwischen zwei benachbarten Polstücken 25 ändert.

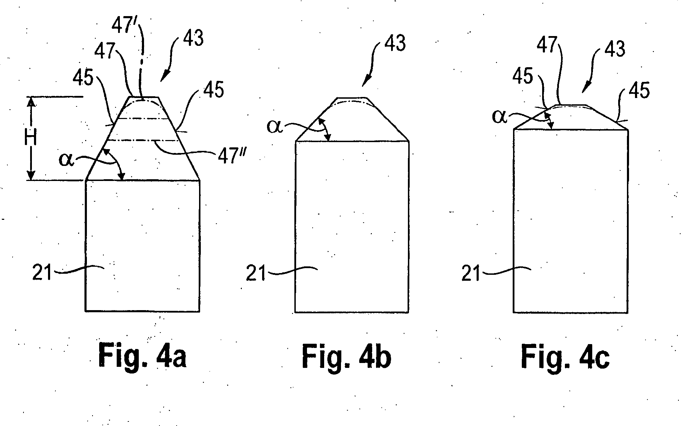

Figur 4 zeigt schematisch Draufsichten auf Polstäbe 21, gesehen in Richtung der Achse 7. Figur 4a zeigt hierbei die Draufsicht auf den im Bereich der Werkzeugeinsteckseite am durchmesserkleinsten Bereich des Außenmantels der Aufnahmehülse 3 anliegenden Polstift, während Figur 4c die Kontur des im durchmessergrößten Bereich des Außenmantels anliegenden Polstifts 21 zeigt. In Figur 4b ist einer der zwischen dem obersten und dem untersten Polstift in dem Stapel angeordneter Polstifte 21 dargestellt.

Die Kontur jedes Endflächenbereichs 43 wird durch zwei aufeinander zu geneigte Teilflächenbereiche 45 (Figur 4a) festgelegt, die in einem in Richtung der Achse 7 sich erstreckenden, zur Anlage am Außenmantel der Aufnahmehülse 3 des Werkzeughalters 5 bestimmten Scheitelbereich 47 ineinander übergehen. Im dargestellten Ausführungsbeispiel sind die seitlichen Teilflächen 45 und die Fläche des Scheitelbereichs 47 eben und begrenzen einen trapezförmigen Querschnitt, dessen Seitenflächenwinkel α in Richtung der Achse 7 vom durchmesserkleinsten Bereich des Außenmantels zum durchmessergrößten Bereich hin abnimmt. Die Breite der ebenen Scheitelfläche ist, gesehen in Umfangsrichtung des Werkzeughalters 5, von Polstab zu Polstab etwa gleichbleibend, wobei jedoch die radiale Höhe H dementsprechend abnimmt.

Wie in den Figuren 4a bis 4c durch strichpunktierte Linien angedeutet ist, kann die ebene Scheitelfläche 47 auch durch eine gekrümmte Scheitelfläche 47' ersetzt sein. Die Krümmung kann sich ggf. auch zumindest über einen Teilbereich der Teilflächen 45 erstrecken. Der Krümmungsradius nimmt hierbei in Richtung des sich erweiternden konusförmigen Außenmantels des Hülsenabschnitts zu. In dieser Gestaltung können die Polstäbe 21 zumindest im Scheitelbereich gerundete Endflächenbereiche 43 bilden. Weiter alternativ kann der Neigungswinkel α von Polstab zu Polstab gleich sein, wobei dann die Höhe H in Richtung der sich erweiternden Konusfläche des Außenmantels abnimmt, wie dies z. B. in Figur 4a bei 47" zusätzlich für den untersten Polstab relativ zur Kontur des obersten Polstabs angedeutet ist.

Die Variation kann in Richtung der Achse kontinuierlich oder von Polstab 21 zu Polstab 21 diskontinuierlich, also in Stufen erfolgen. Durch die Variation des Endflächenquerschnitts der Polstäbe wird der Übergang des Magnetflusses vom Polstab zum Werkzeughalter variiert und damit die Magnetflussstärke sowie dementsprechend die Wirbelstromamplitude im Kontaktbereich des Polstabs. Es versteht sich, dass in Richtung der Achse 7 variierende Endbereichsqüerschnitte auch bei einstückigen Polelementen angewandt werden können, also Polelementen, die nicht aus gestapelten Polstäben segmentiert aufgebaut sind.

Die Induktionsspuleneinheit 1 soll möglichst vielseitig auch bei Werkzeughaltern mit unterschiedlichem Konuswinkel ihres Außenmantels eingesetzt werden können. Um sicherzustellen, dass der Endflächenbereich 43 jedes Polstabs 25 für sich genommen auch bei Variation des Konuswinkels in Anlagekontakt mit dem Außenmantel kommt, trägt die Ritzelwalze 29 auf einer gemeinsamen, mit dem Antriebsrad 31 fest verbundenen Welle mehrere drehbar auf der Welle 49 gelagerte Einzelritzel 51, die mit je einer Linearverzahnung 27 eines der Polstäbe 25 kämmen. Die drehbar auf der Welle 49 sitzenden Ritzel 51 sind über je eine Rutschkupplung (nicht dargestellt) entweder mit der Welle 49 oder einem benachbarten Ritzel 51 gekuppelt. Die Ritzelwelle 29 vermag deshalb nicht nur sämtliche Polstäbe 25 gemeinsam anzutreiben, sondern lässt auch Relativverschiebungen zwischen Polstäben 25 zu, deren Ritzel 51 über eine Rutschkupplung angetrieben wird.

Es versteht sich, dass sämtliche Ritzel 51 über Rutschkupplungen mit der Welle 49 gekuppelt sein können, dass aber im Einzelfall zumindest ein Teil des im durchmesserkleinsten Bereich des Außenmantels des Hülsenabschnitts 3 anliegenden Polstabs 25, hier des obersten Polstabs, das zugehörige Ritzel auch formschlüssig mit der Welle 49 gekuppelt sein kann, während andere dem durchmessergrößeren Bereich des Außenmantels zugeordnete Ritzel 51 begrenzt kraftschlüssig, z. B. über Rutschkupplungen, mit der Welle 49 verbunden sein können. Die Rutschkupplungen können zwischen dem Ritzel und der Welle 49 wirksam sein, so dass diese Ritzel zueinander parallel angetrieben werden. Auch eine serielle Anordnung ist bei Rutschkupplungen denkbar, sofern deren Auslösedrehmoment von Ritzel zu Ritzel in Richtung des sich verbreiternden konischen Außenmantels der Aufnahmehülse 3 abnimmt.

Der von dem Magnetfluss zu durchflutende Bereich der Aufnahmehülse 3 des Werkzeughalters 5 soll zweckmäßigerweise auf den axialen Bereich begrenzt werden, in welchem der Werkzeugschäft im Presssitz gehalten wird, um einerseits den Werkzeughalter 5 thermisch nur wenig zu belasten und andererseits den Kühlaufwand sowie die zum Kühlen erforderliche Zeitspanne zu verringern. Bei herkömmlichen Induktionsspuleneinheiten wird der vom Magnetfluss durchflutete Bereich durch die axialen Abmessungen der den Magnetfluss bewirkenden Polelemente festgelegt. Um die Zahl der im Betrieb an der Aufnahmehülse 3 anliegenden Polstäbe 25 und damit die wirksame axiale Höhe der Polelemente 21 ändern zu können, sind in Umfangsrichtung seitlich der Polelemente 21 Nockenwalzen 53 drehbar angeordnet, deren Nocken 55 mit an den einzelnen Polstäben 25 angeformten Anschlagflächen 57 zusammenwirken. Die Nocken 55 können bei von dem Werkzeughalter 5 radial zurückgezogenen Polstäben 25 in deren Verschiebeweg eingeschwenkt werden und blockieren damit die Zustellbewegung des Polstabs 25 auf den Werkzeughalter 5 zu. Die blockierten Polstäbe 25 sind dann für die Durchflutung blockiert.

Jede der Nockenwellen 53 trägt ein Antriebszahnrad 57, das mit einem wiederum im Gehäuse 13 gleichachsig zur Achse 7 drehbar gelagerten zweiten Ringzahnrad 59 kämmt. Das Ringzahnrad 59 ist über ein Zwischengetriebe 61 von einem Handdrehknopf 63 aus antreibbar, so dass einander entsprechende Polstäbe 25 der einzelnen Polelemente 21 gemeinsam blockierbar oder freigebbar sind. Es versteht sich, dass der Handbetätigungsknopf 63 wie auch der Handhebel 35 ggf. durch elektromotorische Antriebe ersetzt sein können.

Die Nocken 55 und/oder Anschlagflächen 57 sind zweckmäßigerweise gestaffelt angeordnet, so dass sie abhängig von der Drehung der Nockenwellen 53 nacheinander zum Eingriff kommen und dementsprechend eine variable Zahl der Polstäbe 25 blockiert werden kann. Zweckmäßigerweise ist die Staffelung der Nocken 55 und der Anschlagflächen 57 so gewählt, dass beginnend mit dem am durchmessergrößten Bereich des Außenmantels der Aufnahmehülse 3 anliegenden, untersten Polstab die Polstäbe der Reihe nach blockierbar sind. Es versteht sich jedoch, dass ggf. auch zwischen den endseitigen Polstäben 25 angeordnete Polstäbe zur Steuerung der Wärmeverteilung in einem Mittelbereich des Stapels gezielt blockiert werden können.

## Patentansprüche

1. Induktionsspuleneinheit zum Erwärmen eines relativ zu einer Achse (7) rotationssymmetrischen Bauteils aus elektrisch leitendem Material, insbesondere eines Hülsenteils, welches in einer zu der Achse zentrischen Aufnahmeöffnung einen langgestreckten Gegenstand im Presssitz hält, vorzugsweise zum Erwärmen des Hülsenteils (3) eines Werkzeughalters (5), der in seiner zur Drehachse zentrischen Aufnahmeöffnung einen Schaft eines Rotationswerkzeugs, insbesondere eines Bohr- oder Fräswerkzeugs, im Presssitz hält, umfassend
- einen zur Achse (7) zentrischen Aufnahmeraum (23) für das Bauteil (3),
- mehrere um die Achse (7) herum verteilt angeordnete, insbesondere in gleichen Winkelabständen verteilt angeordnete Polelemente (21) aus einem Material mit weichmagnetischen, Magnetfluss leitenden Eigenschaften,
- wenigstens eine mit Wechselstrom speisbare Spule (19) zur Erzeugung magnetischer Flüsse in den Polelementen (21), insbesondere mehrere dieser Spulen (19),
- wobei die Polelemente (21) radial zur Achse (7) beweglich an der Einheit (1) geführt sind und zwischen einer der Achse (7) nahen ersten Stellung und einer der Achse (7) fernen zweiten Stellung bewegbar sind und
- wobei die Polelemente (21) der Achse (7) im Wesentlichen radial zugewandte Endflächen (43) haben, die in der ersten Stellung zumindest in einem Teilbereich ihrer axialen Höhe längs einer Erzeugenden einer äußeren Umfangsfläche des Bauteils (3) in Anlagekontakt oder nahezu in Anlagekontakt mit der äußeren Umfangsfläche des Bauteils (3) stehen,
**dadurch gekennzeichnet, dass**
zumindest der für die Anlage oder Nahezu-Anlage bestimmte Teilbereich der Endfläche (43) jedes Polelements als längs der Achse langgestreckter Scheitelbereich (47) von zur Achse (7) hin aufeinander zu verlaufenden Teilflächen (45) gebildet ist, wobei die radiale Höhe (H) der von den Teilflächen (45) begrenzten achsnormalen Querschnittsfläche des Polelements (21) radial zur Achse (7) und/oder der Krümmungsradius des Scheitelbereichs (47') in der achsnormalen Querschnittsfläche und/oder die Breite des Scheitelbereichs (47"), in Umfangsrichtung des Bauteils (3) gesehen, in der achsnormalen Querschnittsfläche längs der Achse (7) variiert ist.

2. Induktionsspuleneinheit nach Anspruch 1, **dadurch gekennzeichnet, dass** zumindest eines oder sämtliche der Polelementen (21) als Stapel aus mehreren zueinander parallel radial zur Achse (7) relativ zueinander beweglich geführten Polstäben (25) ausgebildet sind, deren der Achse (7) zugewandte Enden gesonderte Scheitelbereiche (47) bilden, wobei die radiale Höhe (H) der von den Teilflächen (45) begrenzten, achsnormalen Querschnittsfläche radial zur Achse (7) und/oder der Krümmungsradius des Scheitelbereichs (47') in der achsnormalen Querschnittsfläche und/oder die Breite des Scheitelbereichs (47"), in Umfangsrichtung des Bauteils (3) gesehen, in der achsnormalen Querschnittsfläche längs der Stapetrichtung zumindest zwischen zwei im Stapel benachbarten Polstäben (25) variiert.

3. Induktionsspuleneinheit nach Anspruch 2, **dadurch gekennzeichnet, dass** die radiale Höhe (H) der von den Teilflächen (45) begrenzten, achsnormalen Querschnittsfläche radial zur Achse (7) und/oder der Krümmungradius des Scheitelbereichs (47') in der achsnormalen Querschnittsfläche und/oder die Breite des Scheitelbereichs (47"), in Umfangsrichtung des Bauteils (3) gesehen, in der achsnormalen Querschnittsfläche innerhalb ein und desselben Polstabs (25) in Längsrichtung der Achse gleichbleibend ist.

4. Induktionsspuleneinheit nach einem der Ansprüche 1 bis 3, **dadurch gekennzeichnet, dass** zur Erwärmung eines Bauteils (3) mit in Richtung der Achse (7) zunehmendem Materialquerschnitt, insbesondere eines Hülsenteils mit konusförmigem Außenmantel mit längs der Achse (7) wachsendem Materialquerschnitt des Bauteils (3) die radiale Höhe (H) der von den Teilflächen (45) begrenzten achsnormalen Querschnittsfläche radial zur Achse (7) abnimmt und/oder der Krümmungsradius des Scheitelbereichs (47') in der achsnormalen Querschnittsfläche zunimmt und/oder die Breite des Scheitelbereichs (47"), in Umfangsrichtung des Bauteils (3) gesehen, in der achsnormalen Querschnittsfläche zunimmt.

5. Induktionsspuleneinheit nach einem der Ansprüche 1 bis 4, **dadurch gekennzeichnet, dass** die aufeinander zu geneigten Teilflächen (45) sowie die Scheitelfläche (47) im Wesentlichen ebene Flächen sind, die eine trapezförmige, achsnormale Querschnittsfläche begrenzen, oder dass die aufeinander zu geneigten Teilflächen (45) sowie die Scheitelfläche (47) konvex gekrümmte Flächen sind, die eine bogenförmige, begrenzte achsnormale Querschnittsfläche begrenzen.

6. Induktionsspuleneinheit nach einem der Ansprüche 1 bis 5, **dadurch gekennzeichnet, dass** zumindest eines oder sämtliche der Polelemente (21) als Stapel aus mehreren zueinander parallel, radial zur Achse relativ zueinander beweglich geführten Polstäben (25) ausgebildet sind, deren der Achse (7) zugewandte Enden die Endfläche (43) des Polelements (21) bilden, und dass den als Stapel von Polstäben (25) ausgebildeten Polelementen (21) eine Antriebseinrichtung (29, 33) zugeordnet ist, die die Polstäbe (25) gemeinsam für die Bewegung zwischen der ersten und der zweiten Stellung insbesondere formschlüssig antreibt, wobei im Antriebskraftübertragungsweg zwischen einem Antriebsorgan (35) und zumindest einer Teilanzahl an Polstäben (25) eine die zu übertragende Antriebskraft begrenzende Vorrichtung, insbesondere eine Rutschkupplung, angeordnet ist.

7. Induktionsspuleneinheit nach Anspruch 6, **dadurch gekennzeichnet, dass** das Antriebsorgan (35) die Polstäbe über Antriebskraftübertragungswege antreibt, die voneinander gesonderte, die Antriebskraft begrenzende Vorrichtungen enthalten.

8. Induktionsspuleneinheit nach Anspruch 6 oder 7, **dadurch gekennzeichnet, dass** zumindest eine Teilanzahl der Polstäbe (25) jedes Polelements (21) je eine Linearverzahnung (27) aufweist, die mit je einem Ritzel (51) kämmt, welches über je eine Rutschkupplung mit dem Antriebsorgan (35) oder einem anderen der Ritzel (51) in Antriebsverbindung steht.

9. Induktionsspuleneinheit nach Anspruch 8, **dadurch gekennzeichnet, dass** die Ritzel (51) und die Rutschkupplungen auf einer gemeinsamen zur Achse parallelen Welle (49) angeordnet sind.

10. Induktionsspuleneinheit nach Anspruch 9, **dadurch gekennzeichnet, dass** die Welle (49) ein Zahnrad (31) trägt, das mit einem zur Achse (7) konzentrischen, mit dem Antriebsorgan (35) in einer Drehantriebsverbindung stehenden Ringzahnrad (33) kämmt.

11. Induktionsspuleneinheit nach einem der Ansprüche 1 bis 10, **dadurch gekennzeichnet, dass** zumindest eines oder sämtliche der Polelemente (21) als Stapel aus mehreren zueinander parallel radial zur Achse relativ zueinander beweglich geführten Polstäben (25) ausgebildet sind, deren der Achse (7) zugewandte Enden die Endfläche (43) des Polelements (21) bilden, und dass dem Polelement (21) eine Blockiereinrichtung (53, 55, 57) zugeordnet ist, mittels der die Bewegung wenigstens eines seiner Polstäbe (25) mit radialem Abstand von der ersten Stellung in der zweiten Stellung oder einer dritten Stellung blockierbar ist.

12. Induktionsspuleneinheit nach Anspruch 11, **dadurch gekennzeichnet, dass** wenigstens der in dem Stapel axial am weitesten außen gelegene Polstab (25) oder eine in dem Stapel axial am weitesten außen gelegene Gruppe aus mehreren benachbarten Polstäben (25) blockierbar ist.

13. Induktionsspuleneinheit nach Anspruch 11 oder 12, **dadurch gekennzeichnet, dass** die Blockiereinrichtung (53, 55, 57) dem Stapel von Polstäben (25) benachbart ein mit Anschlagflächen (57) an den zu blockierenden Polstäben (25) zusammenwirkendes, bewegbares Blockierelement (53) mit Gegenanschlagflächen für die Anschlagflächen der zu blockierenden Polstäbe (25) aufweist, insbesondere wenn das Blockierelement (53) als achsparallel zur Achse drehbar antreibbare Nockenwalze ausgebildet ist, deren Nocken (55) mit den Anschlagflächen (57) der Polstäbe (25) zusammenwirkende Gegenanschlagflächen bilden.

14. Induktionsspuleneinheit nach Anspruch 13, **dadurch gekennzeichnet, dass** die Anschlagflächen und/oder Gegenanschlagflächen, bezogen auf die Bewegungsrichtung der Polstäbe (25) und/oder des Blockierelements (53), gestaffelt angeordnet sind.

15. Induktionsspuleneinheit nach Anspruch 13 oder 14, **dadurch gekennzeichnet, dass** sämtliche Blockierelemente (53) in Zwangsantriebsverbindung mit einem gemeinsamen Antriebsorgan (63) stehen, insbesondere wenn die Blockierelemente als achsparallel zur Achse drehbare Nockenwalzen (53) ausgebildet sind und Ritzel (58) aufweisen, die mit einem von dem Antriebsorgan (63) antreibbaren, zur Achse konzentrischen Ringzahnrad (59) gekuppelt sind.

## Claims

1. Induction coil unit for heating a component, in particular a sleeve part, which is rotationally symmetrical in relation to an axis (7), is made of electrically conductive material and holds an elongate object in a press fit in a receiving opening which is central with respect to the axis, preferably so as to heat the sleeve part (3) of a tool holder (5) which holds a shaft of a rotary tool, in particular a drilling or milling tool, in a press fit in its receiving opening which is central with respect to the rotational axis, said induction coil unit comprising:
- a receiving space (23) for the component (3) which is central with respect to the axis (7);
- a plurality of pole elements (21) which are distributed, in particular at regular angular spacings, around the axis (7) and are made of a material having soft-magnetic, magnetic-flux-conducting properties;
- at least one coil (19), to which an alternating current can be supplied, for generating magnetic fluxes in the pole elements (21), in particular a plurality of said coils (19);
- the pole elements (21) being guided on the unit (1) so as to be movable radially with respect to the axis (7) and being movable between a first position close to the axis (7) and a second position remote from the axis (7); and
- the pole elements (21) having end faces (43) which substantially radially face the axis (7) and, in the first position, abut or almost abut an outer peripheral face of the component (3) at least over part of their axial height along a generatrix of the outer peripheral face of the component (3),
**characterised in that**
at least the portion of the end face (43) of each pole element which is intended to abut or almost abut said face is formed as an apex region (47), which extends along the axis, of partial faces (45) extending towards one another towards the axis (7), the radial height (H) of the axially normal cross-sectional area of the pole element (21), which height is defined by the partial faces (45), being varied radially with respect to the axis (7) and/or the radius of curvature of the apex region (47') being varied in the axially normal cross-sectional area and/or the width of the apex region (47"), when viewed in the peripheral direction of the component (3), being varied in the axially normal cross-sectional area along the axis (7).

2. Induction coil unit according to claim 1, **characterised in that** at least one or all of the pole elements (21) are formed as a stack of a plurality of parallel pole rods (25) which are movably guided relative to one another radially with respect to the axis (7), the ends of which pole rods facing the axis (7) form separate apex regions (47), the radial height (H) of the axially normal cross-sectional area that is defined by the partial faces (45) varying radially with respect to the axis (7) and/or the radius of curvature of the apex region (47') varying in the axially normal cross-sectional area and/or the width of the apex region (47"), when viewed in the peripheral direction of the component (3), varying in the axially normal cross-sectional area in the stack direction, at least between two adjacent pole rods (25) in the stack.

3. Induction coil unit according to claim 2, **characterised in that** the radial height (H) of the axially normal cross-sectional area, which is defined by the partial faces (45), remains the same radially with respect to the axis (7), and/or the radius of curvature of the apex region (47') remains the same in the axially normal cross-sectional area and/or the width of the apex region (47"), when viewed in the peripheral direction of the component (3), remains the same in the longitudinal direction of the axis in the axially normal cross-sectional area within the same pole rod (25).

4. Induction coil unit according to any of claims 1 to 3, **characterised in that**, to heat a component (3) having a material cross section which increases in the direction of the axis (7), in particular a sleeve part having a conical lateral surface having a material cross section of the component (3) which increases along the axis (7), the radial height (H) of the axially normal cross-sectional area, which is defined by the partial faces (45), decreases radially with respect to the axis (7) and/or the radius of curvature of the apex region (47') increases in the axially normal cross-sectional area and/or the width of the apex region (47") increases in the axially normal cross-sectional area when viewed in the peripheral direction of the component (3).

5. Induction coil unit according to any of claims 1 to 4, **characterised in that** the partial faces (45) which are inclined towards one another and the apex face (47) are substantially planar faces which define a trapezoidal, axially normal cross-sectional area, or **in that** the partial faces (45) inclined towards one another and the apex face (47) are convexly curved faces which define an arcuate, defined axially normal cross-sectional area.

6. Induction coil unit according to any of claims 1 to 5, **characterised in that** at least one or all of the pole elements (21) are formed as a stack of a plurality of parallel pole rods (25) which are movably guided relative to one another radially with respect to the axis and the ends of which facing the axis (7) form the end face (43) of the pole element (21), and **in that** a drive mechanism (29, 33) is assigned to the pole elements (21) in the form of a stack of pole rods (25) and drives, in particular positively, the pole rods (25) together for movement between the first and the second position, a device, in particular a slipping coupling, which limits the drive force to be transmitted, being arranged in the drive force transmission path between a drive member (35) and at least some of the pole rods (25).

7. Induction coil unit according to claim 6, **characterised in that** the drive member (35) drives the pole rods via drive force transmission paths which contain separate devices that limit the drive force.

8. Induction coil unit according to either claim 6 or claim 7, **characterised in that** at least some of the pole rods (25) of each pole element (21) each have linear teeth (27) which mesh with a pinion (51) in each case, which is drivingly connected to the drive member (35) or another one of the pinions (51) by means of a slipping coupling in each case.

9. Induction coil unit according to claim 8, **characterised in that** the pinions (51) and the slipping couplings are arranged on a common shaft (49) which is parallel to the axis.

10. Induction coil unit according to claim 9, **characterised in that** the shaft (49) carries a gearwheel (31) which meshes with an annular gearwheel (33) which is concentric with the axis (7) and has a rotary drive connection to the drive member (35).

11. Induction coil unit according to any of claims 1 to 10, **characterised in that** at least one or all of the pole elements (21) are in the form of a stack of a plurality of parallel pole rods (25) which are movably guided relative to one another radially with respect to the axis and the ends of which facing the axis (7) form the end face (43) of the pole element (21), and **in that** a blocking mechanism (53, 55, 57) is assigned to the pole element (21), by means of which the movement of at least one of the pole rods (25) of said pole element, at a radial spacing, from the first position into the second position or a third position can be blocked.

12. Induction coil unit according to claim 11, **characterised in that** at least the axially outermost pole rod (25) in the stack or a group of a plurality of adjacent pole rods (25) which is axially outermost in the stack can be blocked.

13. Induction coil unit according to either claim 11 or claim 12, **characterised in that** the blocking mechanism (53, 55, 57), adjacently to the stack of pole rods (25), has a movable blocking element (53) which interacts with stop faces (57) on the pole rods (25) to be blocked and comprises counter-stop faces for the stop faces of the pole rods (25) to be blocked, in particular when the blocking element (53) is formed as a cam roller that can be rotatably driven axially in parallel with the axis, the cams (55) of which form counter-stop faces which interact with the stop faces (57) of the pole rods (25).

14. Induction coil unit according to claim 13, **characterised in that** the stop faces and/or counter-stop faces are staggered in relation to the movement direction of the pole rods (25) and/or the blocking element (53).

15. Induction coil unit according to either claim 13 or claim 14, **characterised in that** all the blocking elements (53) have a positive drive connection to a common drive member (63), in particular when the blocking elements are designed as cam rollers (53) which can be rotated axially in parallel with the axis and have pinions (58) which are coupled to an annular gearwheel (59) which is concentric with the axis and can be driven by the drive member (63).

## Revendications

1. Ensemble de bobine d'induction pour le chauffage d'un composant à symétrie de révolution par rapport à un axe (7) en matériau conducteur électrique, en particulier d'un élément d'enveloppe, qui maintient un objet allongé en ajustement serré dans une ouverture de réception centrée par rapport à l'axe, de préférence pour le chauffage de l'élément d'enveloppe (3) d'un porte-outil (5), qui maintient un arbre d'un outil de rotation, en particulier d'un outil de perçage ou de fraisage, en ajustement serré dans son ouverture de réception centré par rapport à l'axe de rotation, comprenant
- un espace de réception (23) centré par rapport à l'axe (7) pour le composant (3),
- plusieurs éléments polaires (21) répartis autour de l'axe (7), en particulier répartis à des distances angulaires égales, en un matériau à propriétés magnétiques douces, conducteurs de flux magnétique,
- au moins une bobine (19) pouvant être alimentée en courant alternatif pour la génération de flux magnétiques dans les éléments polaires (21), en particulier plusieurs de ces bobines (19),
- dans lequel les éléments polaires (21) sont guidés radialement à l'axe (7) de manière mobile au niveau de l'ensemble (1) et sont déplaçables entre une première position proche de l'axe (7) et une deuxième position éloignée de l'axe (7) et
- dans lequel les éléments polaires (21) de l'axe (7) ont des surfaces d'extrémité (43) orientées de manière essentiellement radiale, qui sont en contact avec appui dans la première position au moins dans une zone partielle de leur hauteur axiale le long d'une génératrice d'une surface périphérique extérieure du composant (3) ou quasiment en contact avec appui avec la surface périphérique extérieure du composant (3),
**caractérisé en ce que**
au moins la zone partielle, déterminée pour l'appui ou le quasi-appui, de la surface d'extrémité (43) de chaque élément polaire est réalisée sous forme de zone de sommet (47) allongée le long de l'axe de surfaces partielles (45) s'étendant l'une sur l'autre vers l'axe (7), dans lequel la hauteur radiale (H) de la surface de section transversale normale à l'axe délimitée par les surfaces partielles (45) de l'élément polaire (21) radialement à l'axe (7) et/ou le rayon de courbure de la zone de sommet (47') dans la surface de section transversale normale à l'axe et/ou la largeur de la zone de sommet (47"), vue dans le sens périphérique du composant (3), dans la surface de section transversale normale à l'axe le long de l'axe (7) varient.

2. Ensemble bobine d'induction selon la revendication 1, **caractérisé en ce qu'**au moins un ou tous les éléments polaires (21) sont réalisés sous forme d'empilement de plusieurs barreaux polaires (25) guidés de manière mobile l'un par rapport à l'autre radialement à l'axe (7) parallèlement l'un à l'autre, dont les extrémités tournées vers l'axe (7) forment des zones de sommet (47) séparées, dans lequel la hauteur radiale (H) de la surface de section transversale normale à l'axe, délimitée par les surfaces partielles (45) radialement à l'axe (7) et/ou le rayon de courbure de la zone de sommet (47') dans la surface de section transversale normale à l'axe et/ou la largeur de la zone de sommet (47"), vue dans le sens périphérique du composant (3), dans la surface de section transversale normale à l'axe le long du sens d'empilement au moins entre deux barreaux polaires (25) adjacents dans l'empilement varient.

3. Ensemble bobine d'induction selon la revendication 2, **caractérisé en ce que** la hauteur radiale (H) de la surface de section transversale normale à l'axe, délimitée par les surfaces partielles (45) radialement à l'axe (7) et/ou le rayon de courbure de la zone de sommet (47') dans la surface de section transversale normale à l'axe et/ou la largeur de la zone de sommet (47"), vue dans le sens périphérique du composant (3), dans la surface de section transversale normale à l'axe à l'intérieur d'un et même barreau polaire (25) dans le sens longitudinal de l'axe sont constants.

4. Ensemble bobine d'induction selon l'une quelconque des revendications 1 à 3, **caractérisé en ce que** pour le chauffage d'un composant (3) avec section transversale de matériau augmentant dans le sens de l'axe (7), en particulier d'un élément d'enveloppe avec enveloppe extérieure de forme conique avec section transversale de matériau croissante le long de l'axe (7) du composant (3), la hauteur radiale (H) de la surface de section transversale normale à l'axe délimitée par les surfaces partielles (45) radialement à l'axe (7) diminue et/ou le rayon de courbure de la zone de sommet (47') dans la surface de section transversale normale à l'axe augmente et/ou la largeur de la zone de sommet (47"), vue dans le sens périphérique du composant (3), dans la surface de section transversale normale à l'axe augmente.

5. Ensemble bobine d'induction selon l'une quelconque des revendications 1 à 4, **caractérisé en ce que** les surfaces partielles (45) inclinées l'une vers l'autre ainsi que la surface de sommet (47) sont des surfaces essentiellement planes, qui délimitent une surface de section transversale normale à l'axe, en forme de trapèze, ou **en ce que** les surfaces partielles (45) inclinées l'une vers l'autre ainsi que la surface de sommet (47) sont des surfaces à courbure convexe qui délimitent une surface de section transversale normale à l'axe délimitée, en forme d'arc.

6. Ensemble bobine d'induction selon l'une quelconque des revendications 1 à 5, **caractérisé en ce qu'**au moins un ou tous les éléments polaires (21) sont réalisés sous forme d'empilement de plusieurs barreaux polaires (25) guidés de manière mobile l'un par rapport à l'autre radialement à l'axe, parallèlement l'un à l'autre dont les extrémités tournées vers l'axe (7) forment la surface d'extrémité (43) de l'élément polaire (21) et **en ce qu'**un dispositif d'entraînement (29, 33) est affecté aux éléments polaires (21) réalisés sous forme d'empilement de barreaux polaires (25), qui entraîne les barreaux polaires (25) ensemble pour le déplacement entre la première et la deuxième position, en particulier par correspondance de forme, dans lequel un dispositif limitant la force d'entraînement à transmettre, en particulier un accouplement à friction, est disposé dans le chemin de transmission de force d'entraînement entre un organe d'entraînement (35) et au moins un nombre partiel de barreaux polaires (25).

7. Ensemble bobine d'induction selon la revendication 6, **caractérisé en ce que** l'organe d'entraînement (35) entraîne les barreaux polaires via des chemins de transmission de force d'entraînement, qui contiennent des dispositifs limitant la force d'entraînement, séparés les uns des autres.

8. Ensemble bobine d'induction selon la revendication 6 ou 7, **caractérisé en ce qu'**au moins un nombre partiel de barreaux polaires (25) de chaque élément polaire (21) présente respectivement une denture linéaire (27), qui s'engrène avec respectivement un pignon (51), qui est en relation d'entraînement avec l'organe d'entraînement (35) ou un autre des pignons (51) via respectivement un accouplement à friction.

9. Ensemble bobine d'induction selon la revendication 8, **caractérisé en ce que** les pignons (51) et les accouplements à friction sont disposés sur un arbre (49) commun parallèle à l'axe.

10. Ensemble bobine d'induction selon la revendication 9, **caractérisé en ce que** l'arbre (49) porte une roue dentée (31) qui s'engrène avec une roue dentée annulaire (33) concentrique par rapport à l'axe (7), en relation d'entraînement rotatif avec l'organe d'entraînement (35).

11. Ensemble bobine d'induction selon l'une quelconque des revendications 1 à 10, **caractérisé en ce qu'**au moins un ou tous les éléments polaires (21) sont réalisés sous forme d'empilement de plusieurs barreaux polaires (25) guidés de manière mobile l'un par rapport à l'autre radialement à l'axe parallèlement l'un à l'autre, dont les extrémités tournées vers l'axe (7) forment la surface d'extrémité (43) de l'élément polaire (21) et **en ce qu'**un dispositif de blocage (53, 55, 57) est affecté à l'élément polaire (21), au moyen duquel le mouvement d'au moins un de ses barreaux polaires (25) avec distance radiale de la première position à la deuxième position ou une troisième position peut être bloqué.

12. Ensemble bobine d'induction selon la revendication 11, **caractérisé en ce qu'**au moins le barreau polaire (25) situé le plus à l'extérieur axialement dans l'empilement ou un groupe de plusieurs barreaux polaires (25) adjacents situé le plus à l'extérieur axialement dans l'empilement peut être bloqué.

13. Ensemble bobine d'induction selon la revendication 11 ou 12, **caractérisé en ce que** le dispositif de blocage (53, 55, 57) présente au voisinage de l'empilement de barreaux polaires (25), un élément de blocage (53) mobile coopérant avec des surfaces de butée (57) au niveau des barreaux polaires (25) à bloquer doté de surfaces de contrebutée pour les surfaces de butée des barreaux polaires (25) à bloquer, en particulier lorsque l'élément de blocage (53) est réalisé sous forme de rouleau à cames pouvant être entraîné en rotation par rapport à l'axe parallèlement à l'axe, dont les cames (55) forment des surfaces de contrebutée coopérant avec les surfaces de butée (57) des barreaux polaires (25).

14. Ensemble bobine d'induction selon la revendication 13, **caractérisé en ce que** les surfaces de butée et/ou les surfaces de contrebutée, par rapport au sens de déplacement des barreaux polaires (25) et/ou de l'élément de blocage (53), sont disposées de manière échelonnée.

15. Ensemble bobine d'induction selon la revendication 13 ou 14, **caractérisé en ce que** tous les éléments de blocage (53) sont en relation d'entraînement forcé avec un organe d'entraînement (63) commun, en particulier lorsque les éléments de blocage (53) sont réalisés sous forme de rouleaux à cames (53) rotatifs par rapport à l'axe parallèlement à l'axe et présentent des pignons (58) qui sont couplés à une roue dentée annulaire (59) concentrique par rapport à l'axe, pouvant être entraînée par l'organe d'entraînement (63).
